# EUROPÄISCHE PATENTSCHRIFT

(11) **EP 2 162 673 B1**
(45) Veröffentlichungstag und Bekanntmachung des Hinweises auf die Patenterteilung: **20.07.2011**
(21) Anmeldenummer: 08751207.5
(22) Anmeldetag: 15.05.2008
(51) Int. Cl.: F21S 8/10, B60Q 1/26

(54) **FAHRZEUGLEUCHTE**
VEHICLE LIGHT
PHARE DE VÉHICULE

(30) Priorität: 23.05.2007 EP 07108707
(43) Veröffentlichungstag der Anmeldung: 17.03.2010
(73) Patentinhaber: Philips Intellectual Property & Standards GmbH, 20099 Hamburg (DE); Koninklijke Philips Electronics N.V., 5621 BA Eindhoven (NL)
(72) Erfinder: BENTER, Nils, NL-5656 AE Eindhoven (NL); SPINGER, Benno, NL-5656 AE Eindhoven (NL); HAENEN, Ludo, NL-5656 AE Eindhoven (NL); MEIJERS, Augustinus Gregorius Henricus, NL-5656 AE Eindhoven (NL); KAANDORP, Wouter Petrus, NL-5656 AE Eindhoven (NL)
(74) Vertreter: Bekkers, Joost J.J
(86) Internationale Anmeldenummer: PCT/IB2008/051914
(87) Internationale Veröffentlichungsnummer: WO 2008/142618

(56) Entgegenhaltungen:
- DE-A1- 10 336 162
- DE-A1-102004 020 154
- DE-U1- 20 200 571

## Beschreibung

Die Erfindung betrifft eine Fahrzeugleuchte, welche zumindest aufweist: eine Lichtquelle, die zumindest eine LED aufweist; ein lichtdurchlässiges Teil, das so angeordnet ist, dass es Licht von der Lichtquelle empfängt; und ein Reflektor, der so angeordnet ist, das er den Teil des Lichts der Lichtquelle reflektiert und zur Vorderseite der Leuchte auskoppelt, welcher durch das lichtdurchlässige Teil hindurchgeht, wobei ein Reflexionsabschnitt und ein Brechungsabschnitt innerhalb des lichtdurchlässigen Teils vorgesehen sind, der Reflektionsabschnitt das von der Lichtquelle austretende Licht durch Totalreflektion zum einen in eine Richtung umlenkt, die im wesentlichen senkrecht zu der optischen Achse des Reflektors verläuft und der Brechungsabschnitt das Licht in Richtung des Reflektor auskoppelt.

Solche Fahrzeugleuchten können zumindest zwei Funktionalitäten besitzen, wobei eine erste Funktionalität durch das Licht, welches den Reflektor verlässt, charakterisiert ist und eine zweite Funktionalität durch das Licht, welches nicht in den Reflektor (nicht neu) einfällt, charakterisiert ist.

Ein solches lichtdurchlässiges Teil, welches so angeordnet ist, dass es Licht von einer Lichtquelle, insbesondere einer LED-Einheit, empfängt und etwa senkrecht zu der optischen Achse der Lichtquelle abstrahlt, ist aus der US 6,598,998 B2 bekannt.

Dieses lichtdurchlässige Teil besitzt einen Reflexionsabschnitt und einen Brechungsabschnitt, wobei diese insbesondere auf der Oberfläche des lichtdurchlässigen Teils vorgesehen sind. Der Reflektionsabschnitt lenkt das von der Lichtquelle austretende Licht durch Totalreflektion in eine Richtung um.

Für das Material des lichtdurchlässigen Teils gibt es keine speziellen Einschränkungen, soweit dieses Teil in üblicher Art und Weise lichtdurchlässig ist und einen genügend großen Brechungsindexunterschied zur Luft aufweist um Totalreflektion zu ermöglichen. Beispielsweise sind solche Materialien: PMMA oder PC.

Fahrzeugleuchten können einen rotationssymmetrischen Reflektor und ein solches lichtdurchlässiges Teil umfassen, in welches Licht einer LED- Lichtquelle entlang der optischen Achse der Lichtquelle eingekoppelt wird. Das Licht verlässt primär dieses lichtdurchlässige Teil etwa senkrecht zur optischen Achse hin zum Reflektor.

Bei einigen Ausführungsformen wird zusätzlich und somit sekundär Licht auch direkt aus dem Bereich des Zentrums, des rotationssymmetrischen lichtdurchlässigen Teils, insbesondere entlang oder nahe der optischen Achse abgestrahlt.

Bei dem Reflektor soll die gesamte reflektierende Oberfläche blendend hell wahrgenommen werden können. Der Reflektor strahlt das zu ihm gelenkte Licht in der Art um, dass die gesetzlich geforderte Lichtverteilung erfüllt wird.

Die LED- Lichtquelle kann der Art angeordnet sein, so dass diese zu der Vorderseite der Leuchte gerichtet ist. Alternativ kann jedoch auch eine andere Abstrahlcharakteristik der LED- Lichtquelle anzutreffen sein.

Für solche Anwendungen grundsätzlich geeignete Reflektoren sind beispielsweise aus der US 6,097,549 A1 bekannt.

Durch die Anordnung von Reflexions- und Brechungsabschnitten wird eine etwa senkrecht zur optischen Achse erfolgende Auskopplung des Lichts hin zum Reflektor angestrebt. Der Reflektor ist derart, jedoch in üblicher Art und Weise gestaltet, so dass dieser das vom lichtdurchlässigen Teil kommende Licht hin zur Vorderseite der Leuchte reflektiert. Beschrieben sind rotationssymmetrische Reflektoren, wobei die optische Achse jeweils durch deren Zentrum verläuft.

Durch die rotationssymmetrische Gestaltung des Reflektors bestehen somit Einschränkungen bezüglich der Designfreiheit für die gesamte Leuchte. Auch ist keine Möglichkeit aufgezeigt weitere Funktionalitäten der Leuchte zu ermöglichen, wie z.B. eine seitliche Sichtbarkeit.

Derartige Leuchten werden beispielsweise als Fahrzeugbeleuchtung, dort insbesondere in Beleuchtungseinheiten als Rückleuchten, Rückfahrscheinwerfer, Tagfahrlichtscheinwerfer und dgl., eingesetzt.

Die Fahrzeugaußenbeleuchtung, wie beispielsweise Signalleuchten, unterliegt bezüglich ihrer wichtigsten Parameter internationaler Normen, wie zum Beispiel die SAE-Standards bzw. die ECE-Reglements.

Für vorgenannte Anwendungen für die Fahrzeugbeleuchtung besteht ein Bedarf an Fahrzeugleuchte mit zusätzlichen Funktionalitäten bzw. diesbezüglichen Designmöglichkeiten für nicht rotationssymmetrisch erscheinende Leuchten.

Die DE 10 2004 020 154 offenbart eine Leuchte für Fahrzeuge mit mindestens einer Leuchtdiode als Lichtquelle und einem Reflektor. Weiterhin sind Seitenlichtablenkmittel zur seitlichen Abstrahlung von Licht vorgesehen. Nach einer Ausführungsform, die in den Figuren 6-8 gezeigt ist, umfassen diese Mittel einen tubusförmigen Lichtleiter mit einer geneigten Endfläche. Ein Teil des Lichts der LED wird in den Lichtleiter eingekoppelt und durch Reflexion an der Endfläche in eine seitliche Richtung abgelenkt, ohne auf den Reflektor zu treffen.

Die DE 103 36 162 offenbart eine Beleuchtungseinheit mit mindestens einer Lichtquelle und mindestens einem der Lichtquelle nachgeschalteten Lichtleitkörper sowie einem Reflektor. Licht von der Lichtquelle tritt in den Lichtleitkörper ein und wird durch innere Reflexion umgelenkt. Schließlich tritt das Licht durch eine Lichtaustrittsfläche in Richtung des Reflektors aus.

Die DE 202 00 571 zeigt eine Fahrzeugleuchte mit wenigstens einer LED als Lichtquelle. Hierbei ist vor wenigstens einer LED ein prismatisches Element vorgesehen, durch das ein Teil des Lichts von der LED mittels Reflexion und Brechung seitlich umgelenkt wird. Hierdurch wird eine weite Winkelverteilung des Lichts erreicht.

Aufgabe der Erfindung ist es, eine Fahrzeugleuchte bereit zu stellen, die eine größere Designfreiheit, insbesondere bezüglich des Designs der Leuchte bzw. deren Erscheinungsbild bei Betrieb der Leuchte, eröffnet.

Die Aufgabe der Erfindung wird durch die Merkmale gemäß Anspruch 1 gelöst.

Erfindungswesentlich ist, dass ein Teil des Lichts von der Lichtquelle durch das lichtdurchlässige Teil definiert (gerichtet) austritt und nicht in den Reflektor einfällt.

Definiert austreten ist im Sinne der Erfindung ein gerichtetes Austreten von Licht, welches ein definiertes Einkoppeln in ein optisches Bauelement, beispielsweise eine Lichtleiteinheit, effektiv ermöglicht.

Damit wird Licht für die zweite Funktionalität der Leuchte zur Verfügung gestellt, ohne dass eine zusätzliche Lichtquelle erforderlich wäre.

Dabei kann dieser Teil des Lichts ebenso, wie der Teil der hin zum Reflektor gerichtet ist, aus dem lichtdurchlässigen Teil austreten. Alternativ kann dieser Teil des Lichts im Sinne der Erfindung auch mit einem anderen Winkelmaß bezüglich der optischen Achse austreten, so dass damit eine weitere modifizierte Gestaltungsmöglichkeit für das lichtdurchlässige Teil ermöglicht ist.

Damit können die Möglichkeiten des Einsatzes einer einzigen LED-Lichtquelle pro Fahrzeugleuchte verbessert ausgeschöpft werden. Diese so genannte Single-Lichtquelle ist gegenüber einer Fahrzeugleuchte mit mehreren LED- Lichtquelle effizienter und statistisch für den Nutzer der Leuchte freundlicher, da bei Defekt einer LED- Lichtquelle die gesamte Fahrzeugleuchte mit mehreren LED- Lichtquelle, insbesondere aus sicherheitstechnischen Aspekten, ersetzt werden muss. Die Leuchte ist außerdem im Rahmen einer industriellen Massenproduktion herstellbar.

Die Unteransprüche 2 bis 8 haben vorteilhafte Weiterbildungen der Erfindung zum Inhalt, ohne die Erfindung damit zu beschränken.

Bevorzugt ist, dass der Teil des Lichts, welcher von der Lichtquelle durch das lichtdurchlässige Teil definiert austritt, in ein Lichtleitsystem einkoppelbar ist.

Es ist außerdem bevorzugt, dass der Reflektor zumindest aus zwei Teilen besteht, deren Zentren nicht auf der optischen Achse (Ax) liegen. Aber auch Ausführungen mit nur einem Reflektor sind im Sinne der Erfindung möglich.

Im Sinne der Erfindung ist weiterhin bevorzugt, dass die Lichtquelle eine einzelne LED ist.

Weitere Einzelheiten, Merkmale und Vorteile der Erfindung ergeben sich aus der folgenden Beschreibung zweier bevorzugter Ausführungsformen anhand der Zeichnung. Es zeigen:
Fig. 1 eine schematische Darstellung einer nicht rotationssymmetrischen Fahrzeugleuchte und
Fig. 2 eine schematische Seitenansicht einer erfindungsgemäßen Fahrzeugleuchte.

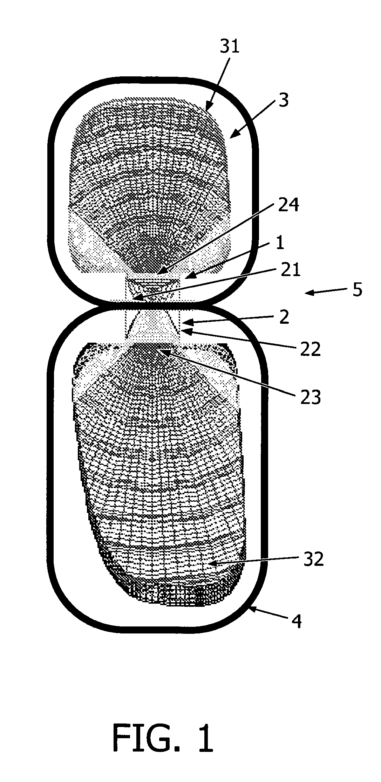

Fig. 1 zeigt eine schematische Darstellung einer nicht rotationssymmetrischen Fahrzeugleuchte.

Die Fahrzeugleuchte 5 weist insbesondere eine Lichtquelle 1 (in Fig. 1 nicht ersichtlich), die eine einzelne LED ist, und ein lichtdurchlässiges Teil 2, das so angeordnet ist, dass es Licht von der Lichtquelle 1 empfängt, auf. Das lichtdurchlässige Teil 2 ist in üblicher Art und Weise dimensioniert und gestaltet, so dass dieses einen genügend großen Teil des Lichts in definierter Art und Weise hin zum Reflektor 3 abgibt.

Der Reflektor 3 ist so angeordnet, dass er einen Teil des Lichts, welches von der Lichtquelle 1 kommt, reflektiert und insbesondere zur Vorderseite der Fahrzeugleuchte 5 auskoppelt und die geforderte Lichtverteilung erzeugt. Damit ist die erste der beiden Funktionalitäten der Fahrzeugleute 5 charakterisiert.

Das lichtdurchlässige Teil 2 besitzt einen Reflexionsabschnitt und einen Brechungsabschnitt (in Fig. 1 nicht dargestellt), die zumindest auf der Oberfläche des lichtdurchlässigen Teils 2 vorhanden sind.

Der Reflektionsabschnitt dient insbesondere dazu, das von der Lichtquelle 1 austretende Licht durch Totalreflektion in eine andere Richtung umzulenken. Die Umlenkung erfolgt dabei im Wesentlichen senkrecht zu der optischen Achse des Reflektors 3, wobei der Brechungsabschnitt das Licht in Richtung des Reflektors 3 auskoppelt.

Der Reflektor 3 ist mehrteilig, hier bestehend aus einem ersten Reflektorteil 31 und einem zweiten Reflektorteil 32, und unsymmetrisch aufgebaut. Ein Teil des Lichts wird über jeweils eine Lichtaustrittsfläche 21 und 22 des lichtdurchlässigen Teils 2 in üblicher Art und Weise in die Reflektorteile 31 und 32 eingekoppelt. Die Lichtaustrittsflächen 21 und 22 sind etwa parallel zueinander angeordnet.

Ein anderer Teil des Lichts wird über jeweils eine Lichtaustrittsfläche 23 und 24 des lichtdurchlässigen Teils 2 in üblicher Art und Weise in ein Lichtleitsystem 4 eingekoppelt. Die Lichtaustrittsflächen 23 und 24 sind etwa parallel zueinander angeordnet, wobei diese etwa senkrecht zu den Lichtaustrittsflächen 21 und 22 angeordnet sind. Damit ist die zweite der beiden Funktionalitäten der Fahrzeugleute 5 hinreichend charakterisiert.

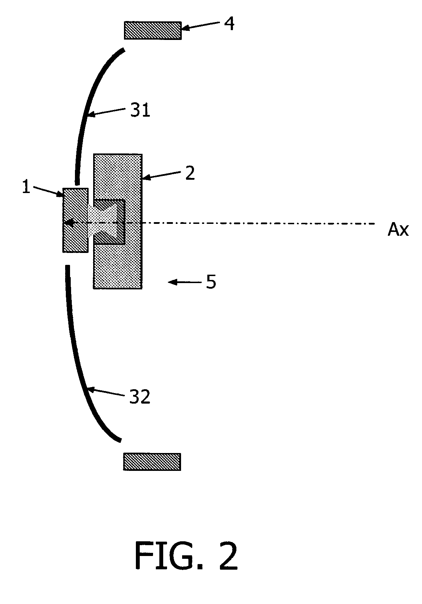

Fig. 2 zeigt eine schematische Seitenansicht der erfindungsgemäßen Fahrzeugleuchte gemäß Fig. 1. Die optische Achse (Ax) der Lichtquelle 1, als Strich-Punkt-Linie dargestellt) verläuft nicht durch die beiden Zentren der Reflektorteile 31 und 32.

Die Fahrzeugleuchte 5 weist insbesondere eine Lichtquelle 1, die eine einzelne LED- Lichtquelle ist, und ein lichtdurchlässiges Teil 2 auf. Die LED-Lichtquelle weist folgende Parameter auf: sie besteht aus einem oder mehreren lichtemitierenden Chips. Das abgegebene Licht wird durch eine Primäroptik in eine bestimmte Richtung ausgerichtet, wie z.B. seitlich umgelenkt oder z.B. lambertsch abgestrahlt. Die LED kann in zwei Helligkeitsniveaus betrieben werden um die unterschiedlichen Beleuchtungsfunktionen (Rücklicht-, Stopplicht-, Signalgeberfunktion) zu ermöglichen.

Die Lichtfarbe kann rot, weiß oder orange (gelb) sein und erfüllt das ECE-Reglement und den SAE-Standart.

## Patentansprüche

1. Fahrzeugleuchte, welche zumindest aufweist: eine Lichtquelle (1), die zumindest eine LED aufweist; ein lichtdurchlässiges Teil (2), das so angeordnet ist, dass es Licht von der Lichtquelle (1) empfängt; und ein Reflektor (3), der so angeordnet ist, das er den Teil des Lichts der Lichtquelle (1) welcher durch das lichtdurchlässige Teil (2) hindurchgeht, reflektiert und zur Vorderseite der Fahrzeugleuchte (5) auskoppelt, wobei ein Reflexionsabschnitt und ein Brechungsabschnitt innerhalb des lichtdurchlässigen Teils (2) vorgesehen sind, der Reflexionsabschnitt das von der Lichtquelle (1) austretende Licht durch Totalreflexion zum einen in eine Richtung umlenkt, die im wesentlichen senkrecht zu der optischen Achse des Reflektors (3) verläuft und der Brechungsabschnitt das Licht in Richtung des Reflektors (3) auskoppelt, und die Fahrzeugleuchte (5) zumindest zwei Funktionalitäten besitzt, wobei eine erste Funktionalität durch das Licht, welches den Reflektor (3) verlässt, charakterisiert ist und eine zweite Funktionalität durch das Licht, welches nicht in den Reflektor (3) einfällt, charakterisiert ist, wobei ein Teil des Lichts von der Lichtquelle durch das lichtdurchlässige Teil (2) definiert austritt und nicht in den Reflektor (3) einfällt.

2. Fahrzeugleuchte gemäß Anspruch 1, **dadurch gekennzeichnet, dass** das lichtdurchlässige Teil (2) zumindest eine Lichtaustrittsfläche (21) besitzt, aus der das ausfallende Licht in den Reflektor (3) einfällt.

3. Fahrzeugleuchte gemäß Anspruch 1, **dadurch gekennzeichnet, dass** das lichtdurchlässige Teil (2) zumindest eine Lichtaustrittsfläche (23) besitzt, aus der das ausfallende Licht nicht in den Reflektor (3) einfällt.

4. Fahrzeugleuchte gemäß Anspruch 1, **dadurch gekennzeichnet, dass** zumindest ein Teil des Lichts, welches nicht in den Reflektor (3) einfällt und/oder zu diesem gerichtet ist, in einen Lichtleiter (4), welcher der zweiten Funktionalität der Leuchte dient, eingekoppelt wird.

5. Fahrzeugleuchte gemäß Anspruch 1, **dadurch gekennzeichnet, dass** der Reflektor (3) zumindest aus zwei Teilen (31; 32) besteht, deren Zentren nicht auf der optischen Achse (Ax) liegen.

6. Fahrzeugleuchte gemäß Anspruch 1, **dadurch gekennzeichnet, dass** die Lichtquelle (1) eine einzelne LED-Lichtquelle ist.

7. Fahrzeugleuchte gemäß Anspruch 1, **dadurch gekennzeichnet, dass** ein Teil des Lichts von der Lichtquelle (1), der durch das lichtdurchlässige Teil (2) definiert austritt und nicht in den Reflektor (3) einfällt, nahezu vollständig in ein optisches Bauelement, insbesondere in ein Lichtleitsystem (4), gerichtet eingebracht wird.

## Claims

1. Vehicle light comprising at least: a light source (1) with at least one LED, a transparent part (2) which is so arranged that it receives light from the light source (1), and a reflector (3) which is so arranged that it reflects a portion of the light from the light source (1) that passes through the transparent part (2) and decouples it to the front of the vehicle light (5); whereby a reflection portion and a refractive portion within the transparent part (2) are provided, where the reflection portion first decouples the light emitted by the light source (1) by total reflection in a direction substantially perpendicular to the optical axis of the reflector (3), and the refractive portion decouples the light in the direction of the reflector (3); and where the vehicle light (5) has at least two functionalities, whereby a first functionality is **characterized by** the light that leaves the reflector (3), and a second functionality is **characterized by** the light that is not incident on the reflector (3); whereby a defined portion of the light from the light source exits through the transparent part (2) and is not incident on the reflector (3).

2. Vehicle light according to claim 1, **characterized in that** the transparent part (2) has at least one light-emitting surface (21) from which the emitted light falls on the reflector (3).

3. Vehicle light according to claim 1, **characterized in that** the transparent part (2) has at least one light-emitting surface (21) from which the emitted light does not fall on the reflector (3).

4. Vehicle light according to claim 1, **characterized in that** at least a portion of the light that does not fall on the reflector (3) and/or is directed to it, is coupled to a light conductor (4), which serves the second functionality of the light.

5. Vehicle light according to claim 1, **characterized in that** the reflector (3) comprises at least two parts (31, 32), the centres of which do not lie on the optical axis (Ax).

6. Vehicle light according to claim 1, **characterized in that** the light source (1) is a single LED light source.

7. Vehicle light according to claim 1, **characterized in that** a portion of the light from the light source (1) that passes through the transparent part, (2) and is not incident on the reflector (3), is nearly completely directed into an optical component, in particular, in a light guide system (4).

## Revendications

1. Phare de véhicule qui présente au moins : une source lumineuse (1) qui comporte au moins une LED ; un élément transparent (2) qui est agencé de telle sorte qu'il reçoit de la lumière de la source lumineuse (1) ; et un réflecteur (3) qui est agencé de telle sorte qu'il réfléchit la partie de la lumière de la source lumineuse (1) qui traverse l'élément transparent (2) et déclenche vers l'avant du phare de véhicule (5), dans lequel une section de réflexion et une section de réfraction sont prévues à l'intérieur de l'élément transparent (2), la section de réflexion dévie la lumière sortant de la source lumineuse (1) par réflexion totale d'une part dans une direction qui s'étend de manière essentiellement perpendiculaire à l'axe optique du réflecteur (3) et la section de réfraction déclenche la lumière en direction du réflecteur (3), et le phare de véhicule (5) possède au moins deux fonctionnalités, dans lequel une première fonctionnalité est **caractérisée par** la lumière qui quitte le réflecteur (3) et une deuxième fonctionnalité est **caractérisée par** la lumière qui n'est pas incidente dans le réflecteur (3), dans lequel une partie de la lumière de la source lumineuse sort de manière définie par l'élément transparent (2) et n'est pas incidente dans le réflecteur (3).

2. Phare de véhicule selon la revendication 1, **caractérisé en ce que** l'élément transparent (2) possède au moins une surface de sortie de lumière (21) de laquelle la lumière émergente est incidente dans le réflecteur (3).

3. Phare de véhicule selon la revendication 1, **caractérisé en ce que** l'élément transparent (2) possède au moins une surface de sortie de lumière (23) de laquelle la lumière émergente n'est pas incidente dans le réflecteur (3).

4. Phare de véhicule selon la revendication 1, **caractérisé en ce qu'**au moins une partie de la lumière, qui n'est pas incidente dans le réflecteur (3) et/ou est orientée par rapport à celui-ci, est injectée dans un guide de lumière (4) qui sert à la deuxième fonctionnalité du phare.

5. Phare de véhicule selon la revendication 1, **caractérisé en ce que** le réflecteur (3) se compose d'au moins deux parties (31 ; 32) dont les centres ne se situent pas sur l'axe optique (Ax).

6. Phare de véhicule selon la revendication 1, **caractérisé en ce que** la source lumineuse (1) est une seule source lumineuse LED.

7. Phare de véhicule selon la revendication 1, **caractérisé en ce qu'**une partie de la lumière de la source lumineuse (1), qui sort de manière définie par l'élément transparent (2) et n'est pas incidente dans le réflecteur (3), est introduite de façon orientée presque complètement dans un composant optique, en particulier dans un système de guidage de lumière (4).
